# EUROPÄISCHE PATENTSCHRIFT

(11) **EP 1 110 056 B1**
(45) Veröffentlichungstag und Bekanntmachung des Hinweises auf die Patenterteilung: **03.11.2004**
(21) Anmeldenummer: 99968707.2
(22) Anmeldetag: 25.08.1999
(51) Int. Cl.: G01C 21/20

(54) **NAVIGATIONSSYSTEM ZUR ZUSÄTZLICHEN DARSTELLUNG VON RICHTUNGSANGABEN**
NAVIGATION SYSTEM FOR SUPPLEMENTARY REPRESENTATION OF DIRECTIONAL INFORMATION
SYSTEME DE NAVIGATION PERMETTANT LA REPRESENTATION SUPPLEMENTAIRE D'INDICATIONS DE DIRECTION

(30) Priorität: 03.09.1998 DE 19840120
(43) Veröffentlichungstag der Anmeldung: 27.06.2001
(73) Patentinhaber: Siemens Aktiengesellschaft, 80333 München (DE)
(72) Erfinder: DEWORETZKI, Frank, D-35745 Herborn (DE)
(86) Internationale Anmeldenummer: PCT/EP1999/006229
(87) Internationale Veröffentlichungsnummer: WO 2000/014481

(56) Entgegenhaltungen:
- EP-A- 0 794 408
- WO-A-97/19321
- DE-A- 3 613 422

## Beschreibung

Die Erfindung bezieht sich auf ein Navigationssystem für ein Landfahrzeug mit einer Meßanordnung zur Lieferung von Positions-, Richtungs- und/oder Entfernungsdaten, mit einer Datenquellenanordnung zur Lieferung von Navigationsdaten, mit einer Eingabeanordnung wenigstens zur Eingabe eines Zielpunktes, mit einer Steueranordnung wenigstens zur Bestimmung eines Weges und wenigstens einer Anzeigevorrichtung zur Ausgabe von Navigationshinweisen.

Aus dem Prospekt "CARiN NAVIGATION SYSTEM" von Philips Car Systems aus dem Jahr 1997 ist das Navigationssystem CARiN 520 bekannt. Von einer CD-ROM werden digital codierte Navigationshinweise einer z.B. mit einem Mikroprozessor ausgebildeten Steueranordnung geliefert. Aus den Positionsdaten eines GPS-Systems (GPS = Global Positioning System) und den Richtungsdaten eines Kreiselkompasses ermittelt das Navigationssystem Positionsangaben über den Standort des Fahrzeugs. Nach einer Eingabe eines Zielpunktes führt das Navigationssystem einen Fahrer nach der Berechnung der Position des Fahrzeugs und der zu fahrenden Strecke durch akustische und optische Ausgaben zu diesem Zielpunkt. Durch ein solches System wird dem Fahrer ermöglicht, ein ihm unbekanntes Ziel ohne Ortskenntnis und Lesen von Straßenkarten anzusteuern.

Der Erfindung liegt die Aufgabe zugrunde, ein Navigationssystem zu schaffen, das ermöglicht, den Fahrer von weiteren seine Aufmerksamkeit im Straßenverkehr ablenkenden Handlungen zu befreien.

Die Aufgabe wird durch ein Navigationssystem der eingangs genannten Art dadurch gelöst,
daß die Steueranordnung aus der berechneten Position des Landfahrzeuges und einer gespeicherten Position eines vorgegebenen Ortes zur Bestimmung einer Richtungsangabe vorgesehen ist und
daß die Anzeigevorrichtung zur zusätzlichen Darstellung der von der Steueranordnung ermittelten Richtung vorgesehen ist.

Erfindungsgemäß bestimmt das Navigationssystem die Richtung eines vorgegebenen Ortes, die auf der Anzeigevorrichtung angezeigt wird. Dabei ermittelt die Steueranordnung die Position des Fahrzeuges, entnimmt beispielsweise einer Datenbank die Position des vorgegebenen Ortes und berechnet aus den Daten die Richtung des Ortes. Die Steueranordnung könnte z.B. die Richtung der Stadt Mekka berechnen und die Anzeigevorrichtung die Richtung der Stadt Mekka in Form eines Pfeiles und einer erläuternden weiteren Angabe darstellen. Die erläuternde weitere Angabe könnte die Beschriftung "Mekka" oder eine bildhafte Darstellung, beispielsweise eine stilisierte Moschee sein. Dokument DE-A1-36 13 422 beschreibt ein Richtungsanzeigesystem bei dem die Richtung nach Mekka angezeigt werden kann.

Zusätzlich können von dem Navigationssystem auch Meldungen zu bestimmten Zeitpunkten ausgegeben werden. Beispielsweise könnte der Sonnenuntergang während des Fastenmonats Ramadan berechnet und ausgegeben werden. Weiter könnte das Navigationssystem zu bestimmten Zeitpunkten auch eine vorgegebene Aktion ausführen, wie z.B. das Abspielen eines Musikstückes.

Ein Ausführungsbeispiel der Erfindung wird nachstehend anhand der Figuren näher erläutert. Es zeigen:
- Fig. 1: ein Blockschaltbild eines Navigationssystems für Landfahrzeuge,
- Fig.2 und 3: Darstellungen einer Anzeigevorrichtung des Navigationssystems und
- Fig. 4: ein Flußablaufdiagramm zur Ermittlung der Richtung eines vorgegebenen Ortes.

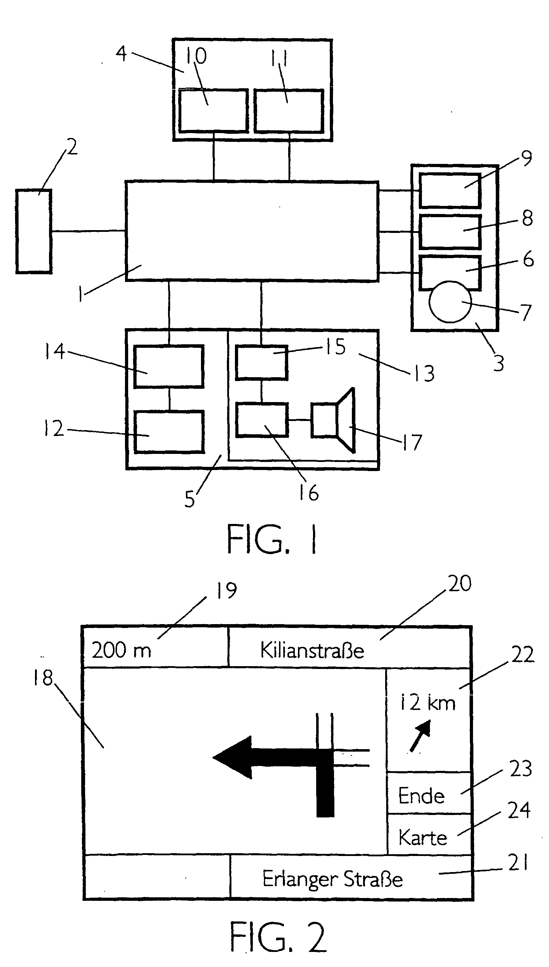

In Fig. 1 ist ein Ausführungsbeispiel eines Navigationssystems für Landfahrzeuge als Blockschaltbild dargestellt. Das Navigationssystem enthält eine Steueranordnung 1, eine Meßanordnung 2, eine Datenquellenanordnung 3, eine Eingabeanordnung 4 und eine Ausgabeanordnung 5. Die Steueranordnung 1 kann beispielsweise einen Mikroprozessor enthalten, der u.a. die Navigationsberechnungen durchführt und mit wenigstens einem Festwertspeicher (ROM) z.B. zur Ausführung eines Programms und einem Schreib- und Lesespeicher (RAM) zur Speicherung von Daten während des Betriebes gekoppelt ist.

Die Meßanordnung 2 liefert der Steueranordnung 1 Daten und enthält beispielsweise ein Tachometer, einen elektronischen Kompaß und eine GPS-Empfangseinheit (GPS = Global Positioning System). Gegebenenfalls enthält die Meßanordnung auch Radsensoren, die der Steueranordnung 1 Richtungs- und Entfernungsdaten von dem linken und rechten Vorder- oder Hinterrad des Fahrzeugs zuführen. Sonst werden die Richtungs- und Entfernungsdaten aus den vom Tachometer und dem elektronischen Kompaß abgegebenen Signalen ermittelt. Die GPS-Empfangseinheit berechnet anhand empfangener Satellitendaten die gegenwärtige Position des Fahrzeugs und gibt die berechneten Positionsdaten an die Steueranordnung 1 weiter. Diese von der GPS-Empfangseinheit gelieferten Positionsdaten weisen eine Ungenauigkeit von bis zu 100 Metern auf.

Die Datenquellenanordnung 3 enthält wenigstens eine Vorrichtung zur Lieferung digital codierter Navigationsdaten von einem Navigationsdatenspeicher an die Steueranordnung 1. Diese Vorrichtung kann beispielsweise ein CD-ROM-Laufwerk 6 sein, daß Daten eines bestimmten Bereichs (z.B. Deutschland) von einer CD-ROM 7 (Navigationsdatenspeicher) entnimmt. Weiter kann die Datenquellenanordnung 3 einen RDS-TMC-Empfänger 8 (RDS = Radio Data System, TMC = Traffic Message Channel) oder ein GSM-Modul 9 (GSM = Global System for Mobile Communication) enthalten, die digital codierte Verkehrsmeldungen empfangen und an die Steueranordnung 1 weitergeben. Das GSM-Modul kann des weiteren auch verwendet werden, um Telefongespräche zu führen.

Die Eingabeanordnung 4 enthält eine Tastatur 10 und gegebenenfalls einen Trackball 11. Ein Benutzer kann manuelle Eingaben über die Tastatur 10 und/oder den Trackball 11 durchführen. Die Tastatur 10 kann dabei auch Teil einer Fernbedienung sein. Die von einem Benutzer (z.B. Fahrer) des Navigationssystems gemachten Eingaben über die Eingabeanordnung 4 werden auch der Steueranordnung 1 zugeführt.

Die Ausgabeanordnung 5 weist eine Anzeigevorrichtung 12 und eine Sprachausgabeschaltung 13 auf. Zur Ansteuerung der Anzeigevorrichtung 12 dient noch eine ebenfalls in der Ausgabeanordnung 5 enthaltene Ansteuerschaltung 14. Bestandteil der Sprachausgabeschaltung 13 ist auch z.B. eine Sprachsysntheseschaltung 15, ein Verstärker 16 und ein Lautsprecher 17.

Die Steueranordnung 1 bestimmt zwischen wenigstens zwei Punkten (Startund Zielpunkt) eine Strecke oder Route. Vor der Fahrt hat der Benutzer (z.B. Fahrer) über die Eingabeanordnung 4 mindestens den Zielpunkt einzugeben. Diese eingegebenen Daten werden in der Regel auch von der Ausgabeanordnung 5 zur Kontrolle für den Benutzer ausgegeben. Während der Fahrt werden dem Fahrer akustische oder optische Anweisungen von der Steueranordnung 1 mittels der Ausgabeanordnung 5 erteilt. Zur Durchführung z.B. der Streckenplanung und der Anweisungen verwendet die Steueranordnung 1 verschiedene Softwaremodule. Anhand der von der Meßvorrichtung 2 gelieferten Daten (Positions-, Richtungs- und Entfernungsdaten) und den von der Datenquellenanordnung 3 zugeführten Daten berechnet die Steueranordnung 1 mittels eines Softwaremoduls zur Positionsbestimmung den jeweiligen Positionspunkt des Fahrzeugs zu Beginn und während der Fahrt. Ein weiteres Modul zur Routenplanung berechnet jeweils die zu dem jeweiligen Zielpunkt zu fahrende Route anhand der von dem Softwaremodul zur Positionsbestimmung ausgegebenen Positionspunkt und dem Zielpunkt. Hierbei können auch Verkehrsmeldungen berücksichtigt werden, um beispielsweise den Fahrer anzuweisen, einen Stau zu umfahren. Ein Softwaremodul zur Routenangabe empfängt den jeweiligen Positionspunkt von dem Softwaremodul zur Positionsbestimmung, verschiedene Routenangaben von dem Softwaremodul zur Routenplanung und gegebenenfalls auch Navigationsdaten von der Datenquellenanordnung 3. Das Softwaremodul zur Routenangabe erzeugt Steuerdaten für die Sprachausgabe und für die bildliche Darstellung von Anweisungen. Es ist auch möglich, einen Landkartenausschnitt auf der Anzeigevorrichtung 12 mit der jeweiligen Positionsangabe darzustellen.

Die Steueranordnung 1 führt mit einem Benutzer einen menügesteuerten Dialog durch. Beispielsweise bietet ein auf der Anzeigevorrichtung 12 angezeigtes Hauptmenü die Menüpunkte
1) Zieleingabe
2) Karte
3) Standort
4) Einstellungen
an. Mit einem Koordinateneingabesystem, das Bestandteil der Tastatur 10 ist, wird beispielsweise ein Menüpunkt selektiert. Ein solches Koordinateneingabesystem kann beispielsweise aus vier Richtungstasten und einer Bestätigungstaste oder einem Trackball bestehen. Durch Betätigung einer Richtungstaste kann beispielsweise die Position eines Cursors oder eines anderes graphischen Symbols (z.B. Balkendarstellung) auf der Anzeigevorrichtung 1 2 verändert werden. Ist ein bestimmter Menüpunkt mittels der Richtungstasten z.B. graphisch hervorgehoben worden, erfolgt nach Betätigen der Bestätigungstaste eine Aktion.

Zu Beginn einer Fahrt wird in der Regel als erstes eine Zieleingabe erfolgen. Nach Auswahl des Menüpunktes "Zieleingabe" im Hauptmenü muß zuerst ein Ortsname eingegeben werden. Dazu wird im Untermenü "Zieleingabe", welches beispielsweise die Menüpunkte
1) Ort
2) Straße
3) Ziel löschen
4) Zielführung
5) Information zum Zielort
6) Zieleingabe Karte
7) Adreßbuch
8) neue Adresse
9) zurück zum Hauptmenü
enthält, der Menüpunkt "Ort" ausgewählt. Auf der Anzeigevorrichtung 12 werden dann beispielsweise Buchstaben angezeigt und die Menüpunkte "Abbruch", "Löschen", "Leer" (für Leerzeichen), "OK" usw. Mit Hilfe des Koordinateneingabesystems wird Buchstabe für Buchstabe des Ortsnamens ausgewählt. Wenn der Benutzer die Eingabe des Ortsnamens ganz oder teilweise beendet hat, betätigt dieser den Menüpunkt "OK". Die Steueranordnung 1 überprüft, ob der vom Benutzer ganz oder teilweise eingegebene Ortsname sich auf der CD-ROM 7 eindeutig finden läßt. Ist der Ortsname nicht vorhanden wird dies dem Benutzer mitgeteilt, so daß dieser einen anderen Namen eingeben kann. Ist die Eingabe mehrdeutig, wird eine Aufstellung von Ortsnamen auf der Anzeigevorrichtung 12 eingeblendet, aus welcher der gewünschte Ortsname ausgewählt werden kann.

Nach der Auswahl des Ortsnamens wird für die Auswahl eines Straßennamens ein weiteres Menü mit Buchstaben und den Menüpunkten "Abbruch", "Löschen", "Leer" (für Leerzeichen), "OK" usw. auf der Anzeigevorrichtung 12 dargestellt. Der Straßenname wird auf die gleiche Weise wie der Ortsname eingegeben.

Wenn der Straßenname nicht bekannt ist, kann die Zieleingabe nach Auswahl des Ortsnamens auf eine andere Art durchgeführt werden. Die Zieleingabe kann nach Auswahl des Menüpunktes "Zieleingabe Karte" mit Hilfe einer auf der Anzeigevorrichtung 12 dargestellten Karte durchgeführt werden. Hierbei kann mit einem auf der Landkarte mit einem großen Kartenmaßstab eingeblendeten Cursor zunächst die Zielgegend grob ausgewählt werden und Schritt für Schritt der Kartenmaßstab verkleinert werden, bis der gewünschte Zielpunkt gefunden worden ist.

Die Eingabe des Zielpunktes nach der Auswahl des Ortsnamens kann noch mittels einer Aufstellung durchgeführt werden, die bestimmte Zielkategorien angibt. Im Untermenü "Zieleingabe" muß dann der Menüpunkt "Information zum Zielort" ausgewählt werden. Nach der Selektierung dieses Menüpunktes wird eine Aufstellung mit verschiedenen Kategorien auf der Anzeigevorrichtung 12 angezeigt. Dies können z.B. sein: Hotels, Restaurants, Sehenswürdigkeiten, Parkplätze, Tankstellen, Bahnhöfe oder Museen. Nach Auswahl einer Kategorie wird eine weitere Aufstellung mit verschiedenen Auswahlmöglichkeiten innerhalb der Kategorie eingeblendet. Beispielsweise kann in der Kategorie "Hotels" ein bestimmtes Hotel ausgewählt werden, was den Zielpunkt darstellt.

Ferner besteht die Möglichkeit auf ein Adreßbuch, in dem persönliche Zielpunkte gespeichert sind, durch Auswahl des Menüpunktes "Adreßbuch" zurückzugreifen. Ein neuer Zielpunkt kann über den Menüpunkt "neue Adresse" eingegeben werden. Die Eingabe für das Adreßbuch erfolgt wie oben für die Eingabe des Orts- und Straßennamens beschrieben.

Ein z.B. eingegebener Orts- und Straßenname als Zielpunkt wird mit Hilfe des Menüpunktes "Ziel löschen" gelöscht. Damit die Steueranordnung 1 nach Eingabe des Zielpunktes eine Routenplanung durchführen kann, muß der Benutzer den Menüpunkt "Zielführung" auswählen. Die Anzeigevorrichtung 12 wechselt dann in das Untermenü "Zielführung", in dem verschiedene Darstellungsarten (z.B. Kartendarstellung) angeboten werden. In der ausgewählten Darstellungsart werden dem Fahrer dann während der Fahrt Navigationshinweise gegeben, welche die Sprachhinweise ergänzen sollen.

Fig. 2 zeigt ein Bild einer Darstellungsart der Anzeigevorrichtung 12 während der Fahrt zu dem ausgewählten Zielpunkt (Zielführung). In dem Bild nach der Fig. 2 werden in verschiedenen Bildbereichen dem Fahrer unterschiedliche Informationen angeboten. In einem mittleren Bildbereich 18 wird die Fahrtrichtung angezeigt. In dem Beispiel nach der Fig. 2 ist eine Kreuzung mit einem nach rechts abknickenden Pfeil dargestellt. Im oberen Teil des Bildes ist in einem linken Bereich 19 eine Entfernungsangabe (200 m) und in einem rechts danebenliegenden Bereich 20 eine Zielangabe (Kilianstraße) abgebildet. In einem unteren Bildbereich 21 ist die derzeitige Position (Erlanger Straße) dargestellt. In einem rechten Bereich 22 des Bildes wird die Entfernung zum Ziel (12 km) mit einem die Richtung des Zielpunktes angebenden Pfeil gezeigt. Zwei weitere darunterliegende Bereiche 23 und 24 weisen die Beschriftungen oder Menüpunkte "Ende" und "Karte" auf. Durch Auswahl des Menüpunktes "Ende" wird z.B. in das Hauptmenü zurückgesprungen. Wenn der Menüpunkt "Karte" selektiert wird, wird die Kartendarstellungsart aufgerufen. Aus dem in Fig. 2 beispielhaftem Bild der Anzeigevorrichtung 12 entnimmt der Fahrer also die Information, daß er sich auf der Erlanger Straße befindet und nach 200 m links in die Kilianstraße abbiegen soll, um seinen Zielpunkt nach 12 km zu erreichen.

Vom Hauptmenü aus können noch weitere hier nicht näher erläuterte Menüpunkte (Karte, Standort, Einstellungen) gewählt werden. Nachdem ein solcher Menüpunkt ausgerufen worden ist, wird ein weiters Untermenü angezeigt.

Erfindungsgemäß kann das Navigationssystem auch dafür verwendet werden, um bestimmte Richtungen für ausgewählte Orte anzuzeigen. Dies kann auch mit Meldungen zu vorgegebenen Zeiten verknüpft werden. Beispielsweise kann die Anzeigevorrichtung 12 bei der Zielführung auch eine Richtungsangabe über die Stadt Mekka für Muslime enthalten.

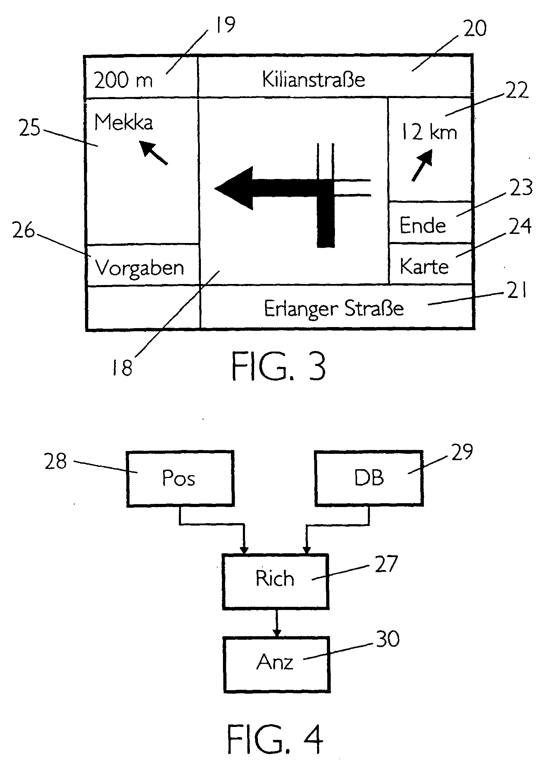

Fig. 3 zeigt ist ein weiteres Bild einer Darstellungsart der Anzeigevorrichtung 12 mit einem Richtungshinweis für die Stadt Mekka während der Zielführung. Außer den oben zu Fig. 2 erläuterten Bildbereichen 18 bis 24 ist in dem Bild nach der Fig. 3 in einem linken Bereich 25 des Bildes eine Richtungsangabe zur Stadt Mekka enthalten. Diese Richtungsangabe enthält einen Pfeil, der in Richtung der Stadt Mekka zeigt, und die Bezeichnung Mekka. Es ist auch möglich eine stilisierte Moschee oder andere Sinnbilder für die Stadt Mekka als die Bezeichnung selbst in dem Bereich 25 darzustellen. Unterhalb dieses Bereiches 25 ist noch ein Bereich 26 vorhanden, der die Beschriftung oder den Menüpunkt "Vorgaben" enthält. Wird dieser Menüpunkt ausgewählt wird in ein Untermenü gesprungen.

Um einen zusätzlichen Richtungshinweis zu geben, enthält das Softwaremodul zur Routenangabe eine Erweiterung. Diese Modulerweiterung läßt sich mit Hilfe des in Fig. 4 dargestellten Flußablaufdiagramms erläutern. Ein Block 27 (Rich) erhält von dem Modul zur Positionsbestimmung eine Angabe über die Position des Fahrzeugs. Dies wird durch einen Block 28 (Pos) angegeben. Von einer Datenbank, die sich z.B. auf der CD-ROM 7 befindet, erhält der Block 27 eine Positionsangabe über die Stadt Mekka. Dies wird durch einen Block 29 (DB) angegeben. Aus den Positionsangaben berechnet der Block 27 die Richtung der Stadt Mekka bezogen auf die Längsachse des Fahrzeugs. Die sich aus dieser Berechnung ergebende Richtung wird von einem Modul 30 (Anz) für die Anzeige aufbereitet.

Die Richtungsangabe der Stadt Mekka kann noch mit einer Zeitfunktion verbunden werden. In dem Untermenü "Vorgaben" kann der Fahrer beispielsweise Uhrzeiten angeben, zu denen er eine Meldung erhalten soll, die ihn zum Anhalten aufruft. Diese Meldung könnte akustisch und beispielsweise unterhalb der Richtungsangabe im Bereich 25 optisch angezeigt werden. Zusätzlich kann das Untermenü "Vorgaben" auch eine Auswahl von Musiktiteln enthalten, die bei einem Stop von einer CD abgespielt werden. Weiter kann auch ein Menüpunkt "Ramadan" enthalten sein. Nach dem Aufruf dieses Menüpunktes gibt der Fahrer den Beginn oder das Ende des Fastenmonats Ramadan ein. Das Navigationssystem ermittelt dann während des Fastenmonats Ramadan anhand der Positionsangabe des Fahrzeugs den Sonnenauf- und -untergang. Dies kann dann wieder akustisch und optisch angegeben werden.

## Patentansprüche

1. Navigationssystem für ein Landfahrzeug mit einer Meßanordnung (2) zur Lieferung von Positions-, Richtungs- und/oder Entfernungsdaten, mit einer Datenquellenanordnung (3) zur Lieferung von Navigationsdaten, mit einer Eingabeanordnung (4) wenigstens zur Eingabe eines Zielpunktes, mit einer Steueranordnung (1) wenigstens zur Bestimmung eines Weges zwischen einem Start- und dem Zielpunkt und wenigstens einer Anzeigevorrichtung (12) zur Ausgabe von Navigationshinweisen, **dadurch gekennzeichnet,**
**daß** die Steueranordnung (1) aus der berechneten Position des Landfahrzeuges und einer gespeicherten Position eines weiteren vorgegebenen Ortes zur Bestimmung einer Richtungsangabe vorgesehen ist und daß die Anzeigevorrichtung (12) zur zusätzlichen Darstellung der von der Steueranordnung (1) ermittelten Richtung zu dem weiteren vorgegebenen Ort vorgesehen ist

2. Navigationssystem nach Anspruch 1, **dadurch gekennzeichnet,**
**daß** die Steueranordnung (1) zur Bestimmung der Richtung der Stadt Mekka und die Anzeigevorrichtung (12) zur Darstellung der Richtung der Stadt Mekka in Form eines Pfeiles und einer erläuternden weiteren Angabe vorgesehen ist.

3. Navigationssystem nach Anspruch 1, **dadurch gekennzeichnet,**
**daß** die Steueranordnung (1) zur Erzeugung von Meldungen oder zur Ausführung vorgegebener Aktionen zu gewählten Zeitpunkten und die Anzeigevorrichtung zur Darstellung der Meldungen vorgesehen ist.

## Claims

1. Navigation system for a land vehicle having a measuring arrangement (2) for supplying position, direction and/or distance data, having a data source arrangement (3) for supplying navigation data, having an input arrangement (4) at least for inputting a destination, having a control arrangement (1) at least for determining a route between a starting point and the destination, and having at least one display apparatus (12) for outputting navigation instructions, **characterized in that** the control arrangement (1) is provided for determining a direction from the calculated position of the land vehicle and a stored position for a further prescribed place, and **in that** the display apparatus (12) is provided for additionally displaying the direction ascertained by the control arrangement (1) to the further prescribed place

2. Navigation system according to Claim 1, **characterized in that** the control arrangement (1) is provided for determining the direction of the city of Mecca and the display apparatus (12) is provided for displaying the direction of the city of Mecca in the form of an arrow and explanatory further information.

3. Navigation system according to Claim 1, **characterized in that** the control arrangement (1) is provided for producing messages or for performing prescribed actions at chosen times and the display apparatus is provided for displaying the messages.

## Revendications

1. Système de navigation destiné à un véhicule terrestre et comportant un dispositif de mesure (2) fournissant des données de position, de direction et/ou de distance, un dispositif source de données (3) fournissant des données de navigation, un dispositif de saisie (4) permettant au moins l'entrée d'un point de destination, un dispositif de commande (1) permettant au moins de déterminer un itinéraire entre un point de départ et le point de destination et au moins un dispositif d'affichage (12) permettant d'éditer des informations de navigation
**caractérisé par le fait**
**que** le dispositif de commande (1) est prévu pour déterminer une indication de direction à partir de la position calculée du véhicule terrestre et d'une position mémorisée d'une autre localité donnée et que le dispositif d'affichage (12) est prévu pour représenter en supplément la direction vers l'autre localité donnée déterminée par le dispositif de commande (1).

2. Système de navigation selon la revendication 1 **caractérisé par le fait**
**que** le dispositif de commande (1) est prévu pour déterminer la direction de la ville de La Mecque et que le dispositif d'affichage (12) est prévu pour représenter la direction de la ville de La Mecque sous la forme d'une flèche et d'une autre indication explicative.

3. Système de navigation selon la revendication 1 **caractérisé par le fait**
**que** le dispositif de commande (1) est prévu pour générer des messages ou pour exécuter des actions données à des instants sélectionnés et que le dispositif d'affichage est prévu pour représenter les messages.
